# EUROPEAN PATENT SPECIFICATION

(11) **EP 4 079 566 B1**
(45) Date of publication and mention of the grant of the patent: **25.09.2024**
(21) Application number: 22169352.6
(22) Date of filing: 22.04.2022
(51) Int. Cl.: B60L 53/10, B60L 53/24, H02M 3/155, H02P 1/00, B60L 53/22

(54) **VEHICLE HIGH-VOLTAGE CHARGING SYSTEM USING A MOTOR DRIVING SYSTEM**
HOCHSPANNUNGSLADESYSTEM FÜR FAHRZEUGE MIT EINEM MOTORANTRIEBSSYSTEM
SYSTÈME DE CHARGE DE HAUTE TENSION DE VÉHICULE UTILISANT UN SYSTÈME DE COMMANDE DE MOTEUR

(30) Priority: 25.04.2021 CN 202110448234; 31.05.2021 GB 202107765
(43) Date of publication of application: 26.10.2022
(73) Proprietor: Delphi Technologies (Suzhou) Company Limited, 215128 Suzhou Jiangsu (CN)
(72) Inventor: XU, Xiangdong, Shanghai (CN); GU, Jacky, Shanghai (CN); WANG, Mike, Kunshan (CN)
(74) Representative: Office Freylinger

(56) References cited:
- US-A1- 2019 023 136
- US-A1- 2020 313 581
- US-B1- 10 369 900

## Description

### FIELD OF INVENTION

The present invention relates to vehicle electrical systems, in particular to a vehicle high-voltage charging system using a motor driving system.

### BACKGROUND

With the much more restricted requirements for energy conservation and environmental protection, electric vehicles with low or zero emissions, including hybrid vehicles and electric-only vehicles, are increasingly used. Although the electric vehicles already have greater advantages than traditional fuel vehicles in terms of power, noise and cost of use, there are still some shortcomings of electric vehicles compared to traditional fuel vehicles, especially the charging problem. Compared to traditional fuel vehicles an empty tank of which can be fully filled in a few minutes and which can then drive more than 400-500 km, it takes at least at least a few hours for electric vehicles to charge the battery to drive similar or less kilometers. As a result, there are still many inconveniences in daily use for electric vehicles.

Accordingly, some fast charging technologies have been proposed in the prior art, which typically use 400 volts for charging. As a result, many charging facilities have been designed to provide 400 volts. More recently, even higher voltage charging technologies, such as 800-volt architectures, have been proposed and used. Higher voltages provide much more efficient charging under the same operating conditions. In this way, the battery can be charged with a battery power of 100 kilometers in a few minutes, or more than 80% of the battery power can be charged in half an hour.

However, most of the current charging facilities are only capable of providing 400 volts charging. In addition, charging at higher voltage requires substantive modifications to existing facilities and is not economical. Therefore, it is proposed in the prior art that using external 400-volt charging voltage, while the battery in the vehicle has a higher voltage specification, such as 800 volts. This enables efficient charging with higher voltage without modifying the present external charging equipment.

In order to achieve boosting an external voltage of 400 volts to 800 volts, in the art, a technical solution is currently proposed which uses the neutral point of a motor in a vehicle motor driving system to receive the power voltage from an electric vehicle external power supply device and to boost it to charge the battery. The electric vehicle external power supply device uses the existing infrastructure, which provides a lower charging voltage, for example 400 volts. With such a solution, it is possible to boost the voltage by means of the motor drive system when it is not operating in driving mode, and provide the boosted voltage to the battery, and thus charge the battery without additional devices and additional costs.

Specifically, such a battery charging solution using motor-driven system is a charging solution that apply external charging power to the motor neutral, by using the motor's coils and the inverter's switching elements to boost the voltage at the motor neutral (e.g., 400 volts) to the higher charging voltage of the battery (e.g., 800 volts). If the external charging voltage has a magnitude suitable for the battery charging voltage (e.g., 800 volts), the external charging voltage can be applied directly to the battery instead of applying external power to the motor neutral. In this manner, when the external charging voltage (e.g. 400 volts) is lower than the battery design charging voltage, the external charging voltage is boosted to the battery charging voltage by using the motor and inverter; when the external charging voltage is suitable for the battery charging voltage, the battery is charged directly by the external voltage.

Typically, a boost charging circuit using the neutral point of the motor comprises: an inverter, which is connected to a rechargeable battery; a motor, which is connected to the inverter and is provided with a neutral point, configured to provide power supplied to the neutral point to the inverter, wherein the inverter and the motor form a motor drive system capable of providing drive to the vehicle when in the driving mode; a relay, which has one end connected to the charging power input terminal and has an opposite end; a neutral point capacitor arranged on a by-pass path, a first end of which is connected to the motor neutral point and to the charging power input terminal, wherein the DC charging power is adapted to be input from the charging power input terminal, and a second end of the by-pass path is connected to the charging power input terminal and to the opposite end of the relay. Such a charging system is e.g. disclosed in document US 2020/313581 A1.

When the motor driving system is operating in a charging mode, the neutral point capacitor functions as an input capacitor of the boost charging circuit during the boost charging process. Whereas when the motor driving system is operating in the driving mode, i.e., when the battery and the inverter drives the motor, this neutral point capacitor must be disconnected from the motor's neutral point, otherwise it will interfere with the normal SVPWM control of the motor. Thus, it is necessary to also have a second relay between the charging power input terminal and the neutral point of the motor (especially between the first terminal of the by-pass path and the neutral point of the motor). The second relay closes the circuit when the boost charging circuit is operating and opens when the motor is driving the vehicle.

In addition, such circuits can be integrated with external voltage direct charging circuits to achieve a multiple (400 and 800 volts) charging systems.

However, in such a boost charging circuit, the second relay is arranged in the main charging circuit, which requires a higher rated current and therefore a larger size. However, for electromagnetic compatibility (EMC) reasons, this second relay usually needs to be arranged in an integrated drive module (iDM). Usually the integrated drive module has very limited space and any oversized relays are not easy or even impossible to package, which makes the entire project impossible to implement. In addition, large rated current relays also lead to higher production costs.

The background technologies described above are intended only for the understanding of the background of this disclosure and should not be understood that they are conventional technologies known to those skilled in the art.

### SUMMARY OF INVENTION

It should be noted that the purpose of the present invention is to overcome one or more drawbacks that have been found in the background art.

To this end, the present invention provides a vehicle high-voltage charging system as defined in independent claim 1.

With the above arrangement, the current of the second relay is significantly reduced because only the ripple current of the neutral capacitor flows through the second relay on the by-pass path. This is because the battery main charging current does not flow through the second relay. Therefore, the size of the second relay is significantly reduced and it can be easily arranged in the integrated drive module. In addition, since the second relay requires only a smaller rated current, the production cost of the relay is also significantly reduced.

Furthermore, the second relay is positioned between the neutral point capacitor and the neutral point of the motor. Alternatively, the neutral point capacitor is positioned between the second relay and the neutral point of the motor.

Thus, the second relay can be flexibly arranged in series with the neutral capacitor in the by-pass path to active and stop the neutral capacitor of the charging system.

Furthermore, the second relay is a relay with solenoid and contactors. The use of such conventional relays allows for better control of production costs and system complexity. Alternatively, the second relay is a semiconductor switch without contactors. For example, such a semiconductor switch is a MOSFET switch. Alternatively, the second relay is a mechanical switch operated by electric motors to switch on or off by a control signal.

Furthermore, the charging system further comprises a third relay having one end connected to the rechargeable battery and an opposite end connected to the charging power input terminal. Thus, a direct charging circuit can be formed and the rechargeable battery can be charged directly through the charging power input terminal.

Furthermore, the charging system further comprises a fourth relay having one end connected to the neutral point of the motor and the first end of the by-pass path and an opposite end connected to the charging power input terminal. It can connect or disconnect the charging power input terminal to meet the regulations.

Furthermore, the by-pass path, the motor, and the inverter are arranged in an integrated drive module (iDM).

Furthermore, the charging system is adapted to be used for 400 to 800 volts boost charging. Thus, it is possible to adapt to a wider range of charging voltages and improve the practicality of this system.

The characteristics and advantages of other aspects of the present invention will be discussed in the following embodiments. Those skilled in the art can clearly understand the content of the present invention and the technical effects obtained based on these exemplary embodiments.

### BRIEF DESCRIPTION OF THE DRAWINGS

The other features and advantages of the present invention will be apparent by referring to the following specific embodiments without limiting the invention, in conjunction with the accompanying drawings, in which:
- Figure 1 is a circuit diagram of a first embodiment of a vehicle high-voltage charging system using a motor-driven system according to the present invention.
- Figure 2 is a circuit diagram of a second embodiment of a vehicle high-voltage charging system using a motor-driven system according to the present invention.

### DESCRIPTION OF EMBODIMENTS

The following are exemplary embodiments according to the present invention. The relevant definitions below are used to describe exemplary embodiments, rather than to limit the scope of the present invention which is defined by the claims.

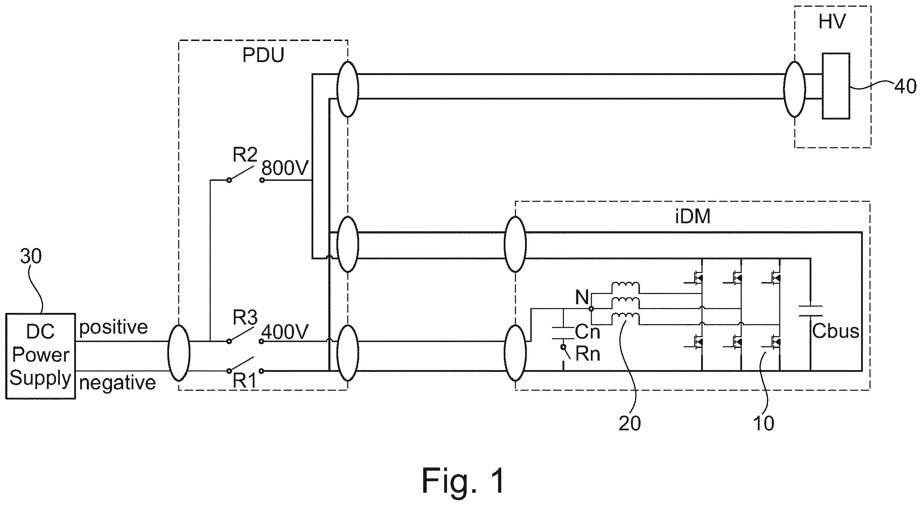

Figure 1 shows an embodiment of a first embodiment of a vehicle high-voltage charging system using a motor-driven system according to the present invention. As shown in the figure, the high-voltage charging system comprises:
An inverter 10 connected to a rechargeable battery 40; in the present embodiment, the rechargeable battery is a high voltage HV battery, e.g. 800 volts high voltage.

A motor 20 connected to the inverter 10. In a driving mode, the motor 20 is used as a driving motor, by discharging through the battery 40, electrical energy then flows through the inverter to the motor 20, thereby driving the motor 20 to operate in order to provide driving power to the vehicle. In addition, the motor 20 has a neutral point N which, in a charging mode, is configured to provide the power (e.g. 400 volts), provided to said neutral point, to said inverter and boost that external power to 800 volts, which then charges the battery 40.

A first relay R1 having one end connected to the charging power input terminal 30 (such as negative electrode) and an opposite end;

A neutral point capacitor Cn arranged on a by-pass path, wherein a first end of the by-pass path is connected to the neutral point N and a positive electrode of the charging power input terminal 30 to which DC charging power is adapted to input, and a second end of the by-pass path is connected to the opposite end of the first relay R1, which is connected to the negative electrode of the charging power input terminal, and to the rechargeable battery;

This neutral point capacitor Cn can filter the DC voltage being input to the charging power input terminal 30 and reduce the interference of other noise to the charging circuit or the discharging circuit.

In the present embodiment, the charging system further comprises a second relay Rn, which is also arranged in the by-pass path and in series with the neutral point capacitor Cn. Specifically, in the embodiment shown a in Figure 1, the neutral capacitor Cn is located between this second relay Rn and the neutral point N of said motor.

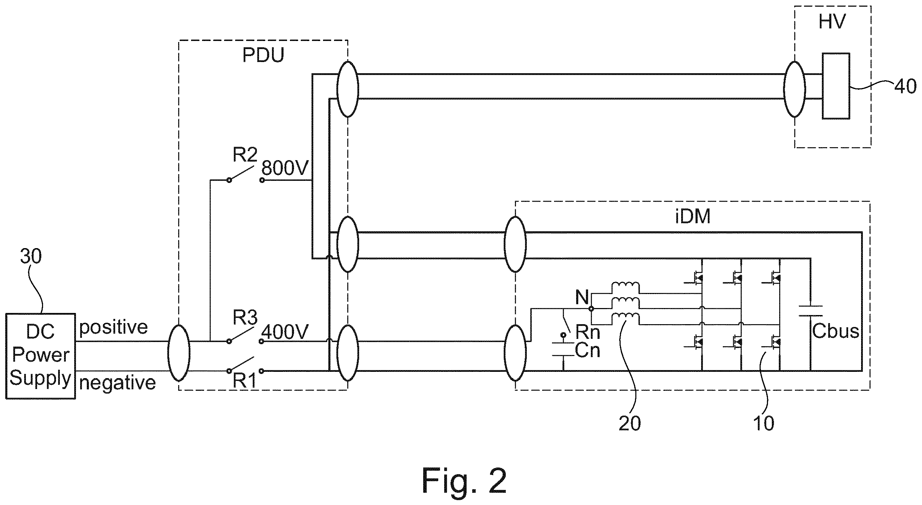

Optionally, in a second embodiment of the vehicle high-voltage charging system according to the present invention as shown in Figure 2, the only difference from the embodiment of Figure 1 is that the second relay Rn can also be located between said neutral capacitor Cn and the neutral point N of the motor.

Optionally, the second relay Rn is a relay with solenoid and contactors. The use of such conventional relays allows for better control of production costs and system complexity. Optionally, the second relay Rn is a semiconductor switch without contactors. For example, such a semiconductor switch is a MOSFET switch. Optionally, the second relay is a mechanical switch operated by electric motors to switch on or off by a control signal.

Since the second relay Rn is arranged in a by-pass path and in series with the neutral capacitor Cn, a ripple current flows in the neutral capacitor Cn. For example, with a DC boost charge current of 200 A to 500 A, the ripple current in the neutral capacitor Cn is only 25 A to 60 A. As a result, the second relay Rn can be designed with a lower rated current, which makes it possible to reduce its size and facilitate its placement to meet the high space requirements, such as in an integrated drive module iDM.

In addition, to reduce electromagnetic interference, the neutral point capacitor Cn and the second relay Rn must be as close as possible to the stator winding of the motor 20.

Preferably, the high-voltage charging system may also include a second capacitor Cbus, which is connected to the inverter 10 and can filter the DC voltage output from the inverter 10 and the DC voltage output from the battery 40, and also store energy for the voltage output from the inverter 10 to finalize the charging of the battery 40, effectively reducing the interference of other noise waves to the charging circuit, the discharge circuit, and the drive circuit.

The circuit described above can be used for boost charging, i.e., the ability to boost external DC power from, for example, 400 volts to 800 volts to charge the battery 40.

Optionally, the high-voltage charging system further comprises a third relay R2, one end of which is connected to the rechargeable battery 40 and the opposite end of which is connected to the charging power input terminal 30 (positive), so that a direct charging circuit can be formed, i.e. the rechargeable battery 40 is charged directly via the charging power input terminal at an external voltage of, for example, 800 volts.

In this case, further, the charging system may further comprise a fourth relay R3, one end of which is connected to the neutral point N of the motor and the first end of the by-pass path, and the opposite end of which is connected to the charging power input terminal 30 (positive), wherein the fourth relay R3 is capable of connecting or disconnecting the charging power input terminal in order to switch between 400 volt boost charging from an external power source and 800 volt direct charging from an external power source in cooperation with the third relay R2.

Furthermore, in the present embodiment, the by-pass path, the motor, the inverter and the capacitor Cbus are arranged in an integrated drive module iDM.

Optionally, the other charge-related relays R1, R2 and R3 may be placed outside the integrated drive module iDM, for example in a power distribution unit PDU.

The circuit charging operation mode of the vehicle high-voltage charging system in this embodiment will be described below.

The vehicle high-voltage charging system according to the present invention can be charged by a first high voltage (e.g. 400 volts) or a second high voltage (e.g. 800 volts) power source, wherein the first high voltage is lower than the second high voltage and the second high voltage is a designed charging voltage of the battery.

With an external charging voltage of 400 volts, the third relay R2 according to the embodiment of the present invention is open and the first relay R1, the second relay Rn and the fourth relay R3 are closed in order to form a boost charging circuit.

For example, 400 volts DC is input to the neutral point of the motor through the charging power input terminal 30, and then the 400 volts is boosted to 800 volts through the coils of the motor and the inductor of the inverter, and subsequently the battery 40 is charged.

With an external charging voltage of 800 volts, the first relay R1 and the third relay R2 in this embodiment are closed and the fourth relay R3 is open in order to form a direct charging circuit. Meanwhile, 800 volts DC power directly charges the battery 40 through the charging power input terminal 30.

In addition, as previously described, the existing motor driving system of the vehicle can be used for boost charging in the present invention. This motor driving system can be powered by the battery 40 to generate power to drive the vehicle. In this case, the relay associated with charging, especially the second relay Rn, is disconnected to avoid the neutral capacitor interfering with the normal SVPWM control of the motor. As a result, the second relay Rn is closed when the boost circuit is operating and is open when the motor is driving the vehicle.

In summary, according to the present invention, the second relay Rn and the neutral capacitor Cn are connected in series in the by-pass path, whereby the second relay Rn is only subjected to the ripple current of the neutral capacitor Cn. According to the boost theory, the ripple current of the input neutral capacitor Cn is 11.5% of the input current (assumption: input voltage = 400V, output voltage = 800V, ripple current rate r = 0.4). If the 400V charging current is 500A, the ripple current of Cn is only 57A. Therefore, the second relay Rn can be a smaller sized relay with a smaller rated current, and its cost will be much lower.

## Claims

1. A vehicle high-voltage charging system using a motor driving system, comprising:
an inverter (10) connectable to a rechargeable battery (40);
a motor (20) connected to the inverter (10) and configured to supply power, which is provided to a neutral point (N) of the motor (20), to the inverter (10);
a first relay (R1) having one end connected to a charging power input terminal and an opposite end;
a neutral point capacitor (Cn) arranged on a by-pass path, wherein a first end of the by-pass path is connected to the neutral point (N) and a charging power input terminal to which DC charging power is adaptable to input, and a second end of the by-pass path is connectable to the rechargeable battery and the opposite end of the first relay (R1);
**characterized in that** the charging system further comprises a second relay (Rn) arranged in the by-pass path and in series with the neutral point capacitor (Cn).

2. The vehicle high-voltage charging system using a motor driving system according to claim 1, wherein the second relay is positioned between the neutral point capacitor and the neutral point of the motor.

3. The vehicle high-voltage charging system using a motor driving system according to claim 1, wherein the neutral point capacitor is positioned between the second relay and the neutral point of the motor.

4. The vehicle high-voltage charging system using a motor driving system according to claim 1, wherein the second relay is a relay with solenoid and contactors.

5. The vehicle high-voltage charging system using a motor driving system according to claim 1, wherein the second relay is a semiconductor switch without contactors.

6. The vehicle high-voltage charging system using a motor driving system according to claim 5, wherein the semiconductor switch is a MOSFET switch.

7. The vehicle high-voltage charging system using a motor driving system according to claim 1, wherein the charging system further comprises a third relay (R2) having one end connected to the rechargeable battery and an opposite end connected to the charging power input terminal.

8. The vehicle high-voltage charging system using a motor driving system according to claim 1, wherein the charging system further comprises a fourth relay (R3) having one end connected to the neutral point of the motor and the first end of the by-pass path and an opposite end connected to the charging power input terminal.

9. The vehicle high-voltage charging system using a motor driving system according to claim 1, wherein the by-pass path, the motor, and the inverter are arranged in an integrated drive module, iDM.

10. The vehicle high-voltage charging system using a motor driving system according to any one of claims 1 to 9, wherein the charging system is adapted to be used for 400V to 800V boost charging.

## Patentansprüche

1. Hochspannungsladesystem für Fahrzeuge, welches ein Motorantriebssystem verwendet, umfassend:
einen Wechselrichter (10), der mit einer wiederaufladbaren Batterie (40) verbindbar ist;
einen Motor (20), der mit dem Wechselrichter (10) verbunden ist und so konfiguriert ist, dass er Strom, der an einen Sternpunkt (N) des Motors (20) bereitgestellt wird, an den Wechselrichter (10) liefert;
ein erstes Relais (R1), welches ein Ende, das mit einem Ladeleistungs-Eingangsanschluss verbunden ist, und ein entgegengesetztes Ende aufweist;
einen Sternpunktkondensator (Cn), der auf einem Umgehungspfad angeordnet ist, wobei ein erstes Ende des Umgehungspfads mit dem Sternpunkt (N) und einem Ladeleistungs-Eingangsanschluss verbunden ist, in den Gleichstrom-Ladeleistung eingegeben werden kann, und ein zweites Ende des Umgehungspfads mit der wiederaufladbaren Batterie und dem entgegengesetzten Ende des ersten Relais (R1) verbunden werden kann;
**dadurch gekennzeichnet, dass** das Ladesystem ferner ein zweites Relais (Rn) umfasst, das in dem Umgehungspfad und in Reihe mit dem Sternpunktkondensator (Cn) angeordnet ist.

2. Hochspannungsladesystem für Fahrzeuge, welches ein Motorantriebssystem verwendet nach Anspruch 1, wobei das zweite Relais zwischen dem Sternpunktkondensator und dem Sternpunkt des Motors angeordnet ist.

3. Hochspannungsladesystem für Fahrzeuge, welches ein Motorantriebssystem verwendet nach Anspruch 1, wobei der Sternpunktkondensator zwischen dem zweiten Relais und dem Sternpunkt des Motors angeordnet ist.

4. Hochspannungsladesystem für Fahrzeuge, welches ein Motorantriebssystem verwendet nach Anspruch 1, wobei das zweite Relais ein Relais mit Magnetspule und Schaltvorrichtungen ist.

5. Hochspannungsladesystem für Fahrzeuge, welches ein Motorantriebssystem verwendet nach Anspruch 1, wobei das zweite Relais ein Halbleiterschalter ohne Schaltvorrichtungen ist.

6. Hochspannungsladesystem für Fahrzeuge, welches ein Motorantriebssystem verwendet nach Anspruch 5, wobei der Halbleiterschalter ein MOSFET-Schalter ist.

7. Hochspannungsladesystem für Fahrzeuge, welches ein Motorantriebssystem verwendet nach Anspruch 1, wobei das Ladesystem ferner ein drittes Relais (R2) umfasst, welches ein Ende, das mit der wiederaufladbaren Batterie verbunden ist, und ein entgegengesetztes Ende, das mit dem Ladeleistungs-Eingangsanschluss verbunden ist, aufweist.

8. Hochspannungsladesystem für Fahrzeuge, welches ein Motorantriebssystem aufweist nach Anspruch 1, wobei das Ladesystem ferner ein viertes Relais (R3) umfasst, welches ein Ende, das mit dem Sternpunkt des Motors und dem ersten Ende des Umgehungspfads verbunden ist, und ein entgegengesetztes Ende, das mit dem Ladeleistungs-Eingangsanschluss verbunden ist, aufweist.

9. Hochspannungsladesystem für Fahrzeuge, welches ein Motorantriebssystem aufweist nach Anspruch 1, wobei der Umgehungspfad, der Motor und der Wechselrichter in einem integrierten Antriebsmodul (iDM) angeordnet sind.

10. Hochspannungsladesystem für Fahrzeuge, welches ein Motorantriebssystem verwendet nach einem der Ansprüche 1 bis 9, wobei das Ladesystem zur Verwendung für einen Schnellladevorgang bei 400V bis 800V eingerichtet ist.

## Revendications

1. Système de charge haute-tension de véhicule utilisant un système d'entraînement à moteur, comprenant :
un onduleur (10) qui peut être connecté à une batterie rechargeable (40) ;
un moteur (20) connecté à l'onduleur (10) et configuré pour alimenter l'onduleur (10) avec un courant qui est délivré à un point neutre (N) du moteur (20) ;
un premier relais (R1) ayant une extrémité connectée à un terminal d'entrée de courant de charge et une extrémité opposée ;
un condensateur de point neutre (Cn) monté sur un trajet de shuntage, dans lequel une première extrémité du trajet de shuntage est connectée au point neutre (N) et à un terminal d'entrée de courant de charge sur lequel un courant de charge CC peut être adapté pour être introduit, et une seconde extrémité du trajet de shuntage peut être connectée à la batterie rechargeable et à l'extrémité opposée du premier relais (R1) ;
**caractérisé en ce que** le système de charge comprend en outre un deuxième relais (Rn) monté dans le trajet de shuntage et en série avec le condensateur de point neutre (Cn).

2. Système de charge haute-tension de véhicule utilisant un système d'entraînement à moteur selon la revendication 1, dans lequel le deuxième relais est positionné entre le condensateur de point neutre et le point neutre du moteur.

3. Système de charge haute-tension de véhicule utilisant un système d'entraînement à moteur selon la revendication 1, dans lequel le condensateur de point neutre est positionné entre le deuxième relais et le point neutre du moteur.

4. Système de charge haute-tension de véhicule utilisant un système d'entraînement à moteur selon la revendication 1, dans lequel le deuxième relais est un relais à solénoïdes et contacteurs.

5. Système de charge haute-tension de véhicule utilisant un système d'entraînement à moteur selon la revendication 1, dans lequel le deuxième relais est un interrupteur à semiconducteurs sans contacteurs.

6. Système de charge haute-tension de véhicule utilisant un système d'entraînement à moteur selon la revendication 5, dans lequel l'interrupteur à semiconducteurs est un interrupteur de type MOSFET.

7. Système de charge haute-tension de véhicule utilisant un système d'entraînement à moteur selon la revendication 1, dans lequel le système de charge comprend en outre un troisième relais (R2) ayant une extrémité connectée à la batterie rechargeable et une extrémité opposée connectée au terminal d'entrée de courant de charge.

8. Système de charge haute-tension de véhicule utilisant un système d'entraînement à moteur selon la revendication 1, dans lequel le système de charge comprend en outre un quatrième relais (R3) ayant une extrémité connectée au point neutre du moteur et à la première extrémité du trajet de shuntage et une extrémité opposée connectée au terminal d'entrée de courant de charge.

9. Système de charge haute-tension de véhicule utilisant un système d'entraînement à moteur selon la revendication 1, dans lequel le trajet de shuntage, le moteur et l'onduleur sont agencés dans un module de propulsion intégré, iDM (*integrated drive module*)*.*

10. Système de charge haute-tension de véhicule utilisant un système d'entraînement à moteur selon l'une quelconque des revendications 1 à 9, dans lequel le système de charge est conçu pour être utilisé pour une charge rapide de 400V à 800V.
